# FASCICULE DE BREVET EUROPEEN

(11) **EP 2 181 871 B1**
(45) Date de publication et mention de la délivrance du brevet: **24.04.2013**
(21) Numéro de dépôt: 09174800.4
(22) Date de dépôt: 02.11.2009
(51) Int. Cl.: B60H 1/00

(54) **Système d'identification d'un composant d'un circuit de traitement thermique d'un flux d'air**
Luftströmungswärmeregulierungskreislaufelementkennzeichnungssystem
Identification system of a component of a heat treatment for an airflow

(30) Priorité: 04.11.2008 FR 0806146
(43) Date de publication de la demande: 05.05.2010
(73) Titulaire: Valeo Systèmes Thermiques, 78321 Le Mesnil St Denis (FR)
(72) Inventeur: Pierres, Philippe, 78990, ELANCOURT (FR); Vincent, Philippe, 28230, EPERNON (FR); Almori, Armelle, 78310, MAUREPAS (FR)
(74) Mandataire: Vieillevigne, Sébastien Nicolas Bernard

(56) Documents cités:
- EP-A- 1 502 642
- FR-A- 2 865 159
- US-B1- 6 722 152

## Description

La présente invention concerne un système d'identification d'un composant intégré à un boîtier de chauffage, de ventilation et de climatisation permettant un traitement thermique d'un flux d'air. En particulier, le composant peut faire partie d'un circuit de traitement thermique d'un flux d'air.

L'invention trouve une application particulièrement avantageuse dans le domaine des équipements de chauffage, de ventilation et de climatisation des véhicules automobiles. De tels équipements sont connus des documents de l'art antérieur EP 1 502 642 et US 6 722 152 B1.

Il convient de préciser qu'on entend ici par « traitement thermique d'un flux d'air » l'ensemble des fonctions de chauffage, de ventilation et de climatisation, prises séparément et de façon unitaire ou en combinaison les unes avec les autres

La plupart des véhicules automobiles sont généralement équipés d'un boîtier de chauffage, de ventilation et de climatisation permettant un traitement thermique d'un flux d'air.

Un boîtier de chauffage, de ventilation et de climatisation est constitué d'une enceinte en matière plastique dans laquelle sont disposés les divers composants d'un circuit de traitement thermique d'un flux d'air destiné à être distribué dans un habitacle d'un véhicule automobile.

Une turbine placée dans une entrée du boîtier de chauffage, de ventilation et de climatisation introduit dans le circuit de traitement thermique le flux d'air à traiter thermiquement provenant de l'extérieur du véhicule et/ou de l'habitacle. Le flux d'air est ensuite déshumidifié et refroidi au passage à travers un évaporateur relié, à l'extérieur du boîtier de chauffage, de ventilation et de climatisation, à une boucle thermodynamique de climatisation du véhicule dans lequel circule un fluide réfrigérant, notamment un fluide sur-critique, par exemple du dioxyde de carbone ou analogue, ou un fluide sous-critique, par exemple du R12 et R134A ou analogue.

La boucle thermodynamique de climatisation comprend en complément de l'évaporateur classiquement un compresseur, un condenseur ou refroidisseur de gaz et un organe de détente.

Le boîtier de chauffage, de ventilation et de climatisation comprend également un radiateur apte à réchauffer le flux d'air et faisant partie d'un circuit de refroidissement d'un moteur, en particulier un moteur thermique permettant la propulsion du véhicule.

Le flux d'air ayant traversé l'évaporateur est séparé en un premier flux dirigé vers le radiateur et un deuxième flux d'air dirigé vers une branche d'air contournant le radiateur. Les premier et deuxième flux d'air se rejoignent dans une chambre de mélange afin d'obtenir un flux d'air à température désirée propre à être diffusé dans l'habitacle.

La température du flux d'air distribué peut être ajustée en faisant varier des moyens de réglage, notamment des volets, modifiant la proportion des premier et deuxième flux d'air arrivant dans la chambre de mélange, ou en réglant la température du fluide d'échange thermique circulant dans le radiateur.

Le flux d'air sortant de la chambre de mélange est finalement canalisé à travers différents conduits distribuant le flux d'air principalement vers le pare-brise, la planche de bord et vers les pieds des passagers avant et arrière du véhicule.

Le boîtier de chauffage, de ventilation et de climatisation peut comprendre également, en amont ou en aval du pulseur, un filtre à air destiné à éliminer les pollens et autres particules, et éventuellement à désodoriser le flux d'air entrant dans le boîtier de chauffage, de ventilation et de climatisation.

Les divers composants du circuit de traitement thermique du flux d'air sont placés à l'intérieur du boîtier de chauffage, de ventilation et de climatisation dans des emplacements prédéfinis par des empreintes réalisées en tant que logement pour les composants.

Bien entendu, une même plateforme de véhicule est prévue pour recevoir un boîtier de chauffage, de ventilation et de climatisation défini, notamment en terme d'encombrement et de performances, indépendamment du type des composants qui y sont installés. Ainsi, par exemple, dans un boîtier de chauffage, de ventilation et de climatisation donné, peuvent être logés, dans une même empreinte, plusieurs types d'évaporateurs différant les uns des autres par leurs dimensions ou par la nature du fluide réfrigérant qu'ils utilisent.

La difficulté qui se présente alors est qu'une fois que le composant, l'évaporateur notamment, est placé dans le boîtier de chauffage, de ventilation et de climatisation, il n'est plus possible de l'identifier sauf à démonter le boîtier de chauffage, de ventilation et de climatisation, ce qui représente une opération très pénalisante à réaliser, principalement quand le boîtier de chauffage, de ventilation et de climatisation est installé dans le véhicule.

Or, certaines recommandations ou normes en vigueur exigent en particulier de pouvoir connaître le fluide utilisé dans les composants, notamment les composants fonctionnant avec du dioxyde de carbone. Actuellement, il ne peut être répondu à cette question qu'en démontant le boîtier de chauffage, de ventilation et de climatisation.

Un but de l'invention est de proposer un système d'identification d'un composant d'un circuit de traitement thermique d'un flux d'air, le composant étant un évaporateur d'une boucle thermodynamique de climatisation de circulation d'un fluide réfrigérant disposé à l'intérieur d'un boîtier de chauffage, de ventilation et de climatisation d'un véhicule automobile, permettant d'identifier le composant depuis l'extérieur du boîtier de chauffage, de ventilation et de climatisation sans avoir à le démonter.

Selon la présente invention, le système d'identification comprend une référence d'identification de l'évaporateur, portée par un support à l'intérieur du boîtier de chauffage, de ventilation et de climatisation, une ouverture de lecture de la référence d'identification, ménagée à travers une paroi du boîtier de chauffage, de ventilation et de climatisation et placée en regard de la référence d'identification, et au moins un moyen d'obturation de l'ouverture de lecture.

Ainsi, on comprend que le système d'identification selon l'invention permet d'accéder à la référence d'identification du composant par lecture à travers l'ouverture prévue à cet effet, l'ouverture étant par ailleurs obturée afin de garantir l'étanchéité par rapport au milieu extérieur. Il n'est donc pas nécessaire de démonter le boîtier pour identifier le composant.

Selon divers modes de réalisation, le moyen d'obturation est constitué par une fenêtre transparente ou par une paroi sécable disposée dans l'ouverture de lecture ou par un volet à charnière disposé dans l'ouverture de lecture, le volet étant mobile entre une position ouverte de lecture et une position fermée d'obturation.

En complément ou en alternative, le moyen d'obturation est constitué par un cache disposé dans l'ouverture de lecture.

Selon un autre mode de réalisation, le moyen d'obturation est intégré à un moyen de fermeture d'une ouverture d'accès à un deuxième composant du boîtier de chauffage, de ventilation et de climatisation et/ou un moyen d'obturation de l'ouverture d'accès au deuxième composant du boîtier de chauffage, de ventilation et de climatisation.

De façon particulièrement avantageuse, le moyen d'obturation est un moyen d'obturation commun à l'ouverture de lecture et à l'ouverture d'accès au deuxième composant du boîtier de chauffage, de ventilation et de climatisation.

Suivant l'invention, le composant est un évaporateur d'une boucle thermodynamique de climatisation de circulation d'un fluide réfrigérant, notamment du dioxyde de carbone. De plus, il est prévu par l'invention que le deuxième composant soit un filtre à air ou un radiateur disposé à l'intérieur du boîtier de chauffage, de ventilation et de climatisation.

La description qui va suivre en regard des dessins annexés, donnés à titre d'exemples non limitatifs, fera bien comprendre en quoi consiste l'invention et comment elle peut être réalisée. Notamment, les figures annexées représentent sur :
- la figure 1a, une vue d'une première variante d'un premier mode de réalisation d'un système d'identification selon la présente invention,
- la figure 1b, une vue en coupe selon l'axe X du système d'identification de la figure 1a,
- la figure 1c, une vue d'une alternative de réalisation du système d'identification de la figure 1a,
- la figure 2a, une vue d'une deuxième variante du premier mode de réalisation du système d'identification selon la présente invention,
- la figure 2b, une vue en coupe selon l'axe X du système d'identification de la figure 2a,
- la figure 3a, une vue d'une troisième variante du premier mode de réalisation du système d'identification selon la présente invention,
- la figure 3b, une vue en coupe en selon l'axe X du système d'identification de la figure 3a,
- la figure 4, une vue en coupe d'une alternative du premier mode de réalisation du système d'identification selon la figure 3a,
- la figure 5a, une vue d'une quatrième variante du premier mode de réalisation d'un système d'identification selon la présente invention,
- la figure 5b, une vue en coupe selon l'axe X du système d'identification de la figure 5a,
- la figure 6a, une vue d'une cinquième variante du premier mode de réalisation du système d'identification selon la présente invention,
- la figure 6b, une vue en coupe selon l'axe X du système d'identification de la figure 6a,
- la figure 7a, une vue d'un sixième variante du premier mode de réalisation d'un système d'identification selon la présente invention,
- la figure 7b, une vue en coupe selon l'axe X du système d'identification de la figure 7a,
- la figure 8a, une vue d'un septième variante du premier mode de réalisation d'un système d'identification selon la présente invention,
- la figure 8b, une vue en coupe selon l'axe X du système d'identification de la figure 8a,
- la figure 9a, une vue d'un deuxième mode de réalisation du système d'identification selon la présente invention et
- la figure 9b, une vue en coupe en selon l'axe X du système d'identification de la figure 9a.

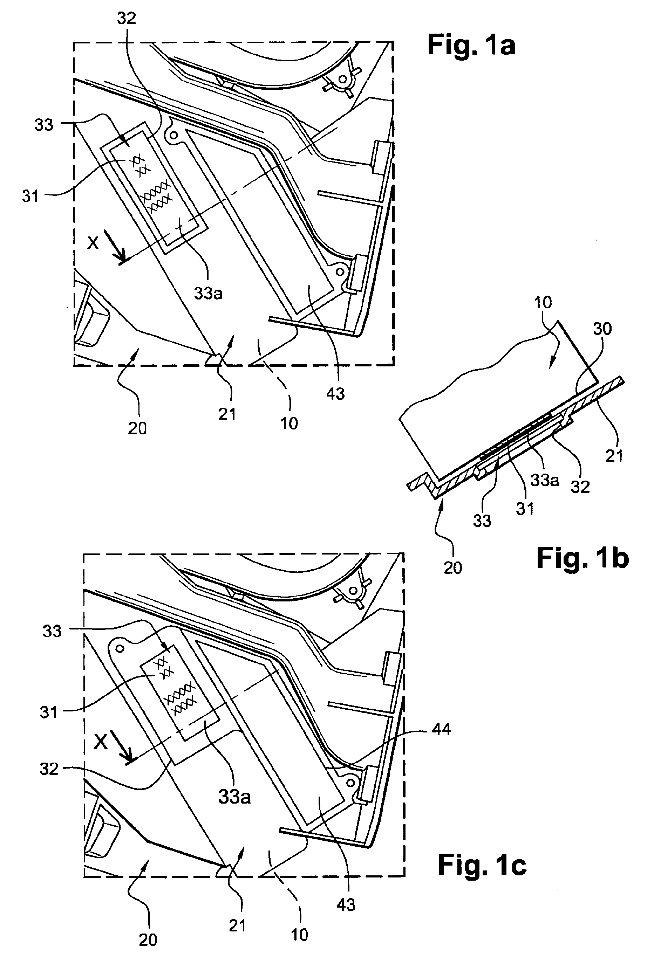

Les figures 1a et 1b présentent une première variante d'un premier mode de réalisation d'un système d'identification conforme à l'invention. Sur les figures 1a et 1b, est représenté un boîtier de chauffage, de ventilation et de climatisation 20 d'un véhicule automobile dans lequel est disposé un composant 10 intégré dans le boîtier de chauffage, de ventilation et de climatisation 20.

Le composant 10 est notamment un élément d'un circuit de traitement thermique d'un flux d'air. Dans un tel cas, le composant 10 peut en particulier être un évaporateur d'une boucle thermodynamique de climatisation du véhicule.

Bien entendu, d'autres composants peuvent être envisagés dans le cadre de l'invention, notamment le radiateur intégré dans le boîtier de chauffage, de ventilation et de climatisation 20 et permettant le traitement thermique du flux d'air.

De manière à satisfaire des exigences normatives relatives imposant de pouvoir identifier certains organes ou composants depuis l'extérieur du boîtier de chauffage, de ventilation et de climatisation 20, en particulier le composant 10 tel que l'évaporateur, selon la présente invention, il est prévu un système d'identification qui va maintenant être décrit en détail.

Comme on peut le voir sur les figures 1a et 1b, le système d'identification comprend plusieurs éléments. Selon la présente invention, le système d'identification intègre au moins une référence d'identification 31 portée par un support 30 agencé à l'intérieur du boîtier de chauffage, de ventilation et de climatisation 20, une ouverture de lecture 32 de la référence d'identification 31, ménagée à travers une paroi 21 du boîtier de chauffage, de ventilation et de climatisation 20, et un moyen d'obturation 33 de l'ouverture de lecture 32. De façon additionnelle, le moyen d'obturation 33 est destiné à assurer une étanchéité minimum du boîtier de chauffage, de ventilation et de climatisation 20.

D'une manière générale, le support 30 sur lequel sont inscrites les informations d'identification du composant 10 peut être localisé à divers endroits dans le boîtier de chauffage, de ventilation et de climatisation 20. Selon une première alternative, les informations d'identification du composant 10 peuvent être sur le composant 10 lui-même, en particulier sur les faces, les tubes, les brides de connexion du composant 10. Selon une autre alternative, les informations d'identification du composant 10 peuvent être sur un élément rapporté ou non sur le composant 10, par exemple une étiquette.

Selon le premier mode de réalisation présentés sur les figures 1a et 1b, l'ouverture de lecture 32 est placée en regard de la référence d'identification 31 et le moyen d'obturation 33 est constitué par une fenêtre transparente 33a disposée dans l'ouverture de lecture 32.

La figure 1c est une vue d'une alternative de la première variante du premier mode de réalisation d'un système d'identification du système d'identification selon la figure 1a. Dans cette alternative, le moyen d'obturation 33 constitué par la fenêtre transparente 33a est en liaison avec un moyen de fermeture 43 d'une ouverture d'accès 44 à un deuxième composant 40 du boîtier de chauffage, de ventilation et de climatisation 20, notamment un filtre à air, afin de former une pièce unitaire.

Dans la suite de la description, de nombreux éléments des figures précédentes sont repris dans les exemples suivants. En conséquence, sauf indication contraire, ces éléments seront identifiés par la même référence et ont les mêmes structures et caractéristiques.

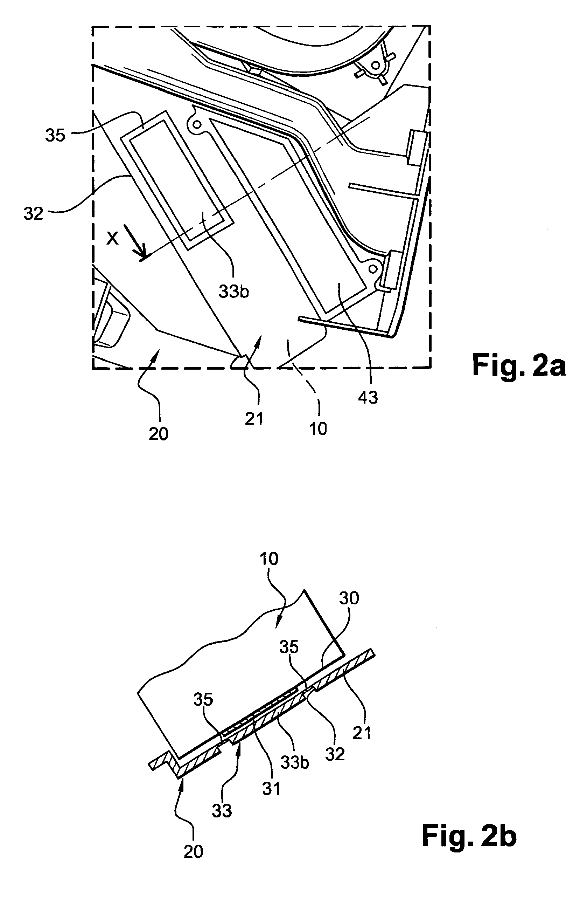

Les figures 2a et 2b présentent une deuxième variante du premier mode de réalisation d'un système d'identification conforme à l'invention. Cette deuxième variante du premier mode de réalisation diffère de la première variante, décrite précédemment en relation avec les figures 1a à 1c, en ce que le moyen d'obturation 33 de l'ouverture de lecture 32 est constitué d'une paroi sécable 33b formée dans l'ouverture de lecture 32, notamment par moulage.

Un cache additionnel, non représenté sur la figure 2b est monté sur l'ouverture de lecture 32 afin de refermer le boîtier de chauffage, de ventilation et de climatisation 20.

Dans cette deuxième variante du premier mode de réalisation, à la première identification du composant 10 intégré dans le boîtier de chauffage, de ventilation et de climatisation 20, il est nécessaire de dégager l'ouverture de lecture 32 par retrait de la paroi sécable 33b, en particulier par rupture d'un lien périphérique 35 assurant une liaison entre la paroi sécable 33b et l'ouverture de lecture 32, notamment au moyen d'un outil approprié tel qu'une lame. Par suite, après lecture de la référence d'identification 31, l'ouverture de lecture 32 est obturée à l'aide du cache additionnel. Ce cache additionnel peut être fourni avec le boîtier de chauffage, de ventilation et de climatisation 20 ou en pièce de rechange.

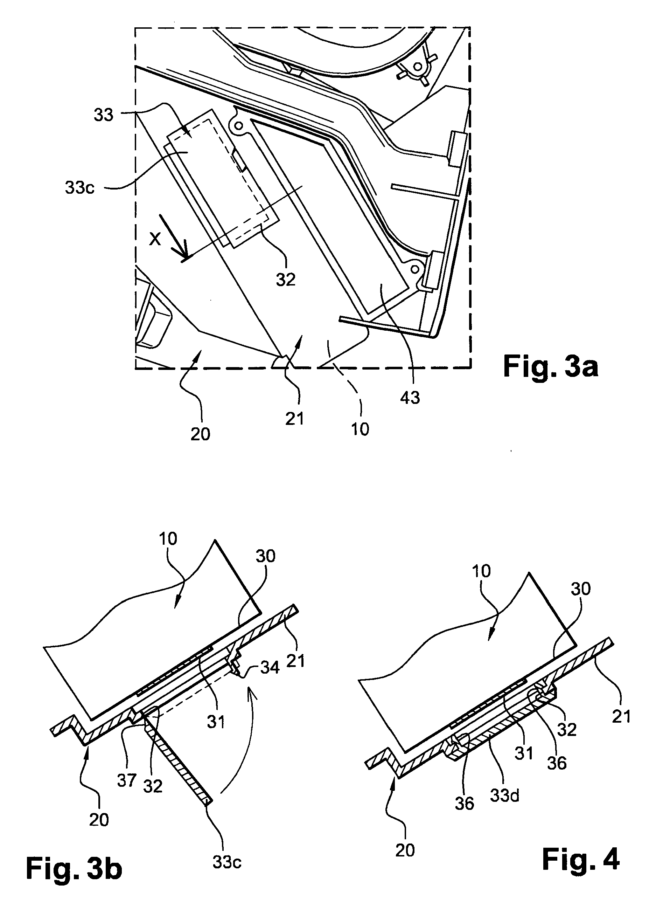

Les figures 3a et 3b montrent une troisième variante du premier mode de réalisation du système d'identification de la figure 1a dans laquelle le moyen d'obturation 33 de l'ouverture de lecture 32 est réalisé par un volet 33c à charnière-film 37 pouvant être manoeuvré entre une position ouverte, en trait plein sur la figure 3b et une position fermée, en trait mixte sur la figure 3b. Afin d'assurer la fermeture du volet 33c, le volet 33c est verrouillée sur l'ouverture de lecture 32 par clippage grâce à un clip de retenue 34 réalisé sur un bord de l'ouverture de lecture 32 et coopérant avec un bord du volet 33c.

Dans une alternative du premier mode de réalisation du système d'identification de la figure 3a présenté sur la figure 4, le moyen d'obturation 33 de l'ouverture de lecture 32 est un cache 33d maintenu sur l'ouverture de lecture 32 par clippage des clips de maintien 36 coopérant avec l'ouverture de lecture 32.

Le cache 33d peut être disposé dès l'origine sur le boîtier de chauffage, de ventilation et de climatisation 20 afin d'assurer la fermeture de l'ouverture de lecture 32.

Le cache 33d est également particulièrement adapté pour fermer l'ouverture de lecture 32 sur le boîtier de chauffage, de ventilation et de climatisation 20 après le retrait du moyen d'obturation 33 de l'ouverture de lecture 32 selon une variante de réalisation de la présente invention. Notamment, le cache 33d est apte à obturer l'ouverture de lecture 32 après retrait de la paroi sécable 33b selon l'exemple de réalisation des figures 2a et 2b.

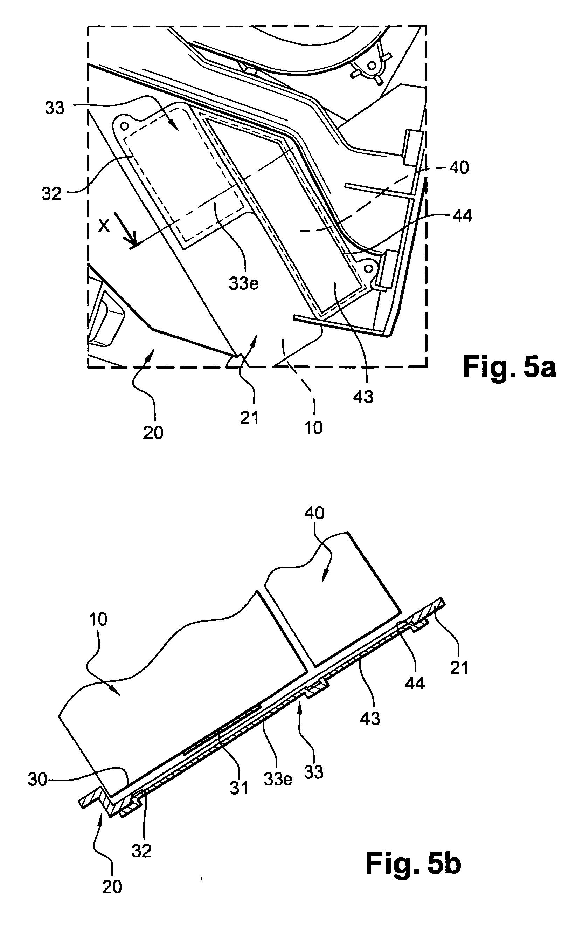

Les figures 5a et 5b présentent une quatrième variante du premier mode de réalisation d'un système d'identification selon la présente invention,

Selon les figures 5a et 5b, le moyen d'obturation 33 de l'ouverture de lecture 32 est constitué par une plaque de fermeture 33e et est intégré au moyen de fermeture 43 d'une ouverture d'accès 44 à un deuxième composant 40 du boîtier de chauffage, de ventilation et de climatisation 20.

Selon l'exemple décrit aux figures 5a et 5b, le deuxième composant 40 est un filtre à air. On remarquera que, dans cet exemple, l'ouverture de lecture 32 de la référence d'identification 31 et l'ouverture d'accès 44 au deuxième composant 40 forment une ouverture unique.

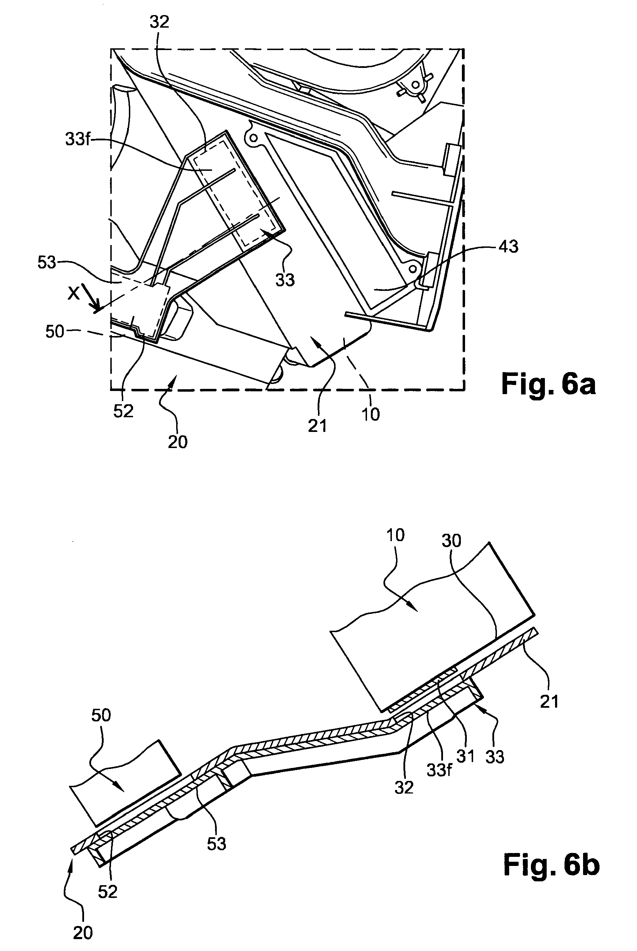

Alternativement, il est envisageable que l'ouverture de lecture 32 et une ouverture d'accès à un deuxième composant soient séparées pour, respectivement, la lecture de la référence d'identification 31 et pour l'accès au deuxième composant. Les figures 6a et 6b présentent une cinquième variante du premier mode de réalisation d'un système d'identification selon la présente invention dans laquelle l'ouverture de lecture 32 et l'ouverture d'accès 44 sont distinctes.

Ainsi, l'ouverture de lecture 32 de la référence d'identification 31 d'un premier composant 10 et une ouverture d'accès 52 à un deuxième composant 50 sont disjointes l'une de l'autre. Dans le présent cas, le deuxième composant 50 est le radiateur du boîtier de chauffage, de ventilation et de climatisation 20. Comme pour le mode de réalisation précédent, le moyen d'obturation 33 de l'ouverture de lecture 32 est constitué par une plaque de fermeture 33f et est intégré au moyen de fermeture 53 de l'ouverture d'accès 52 du deuxième composant 50.

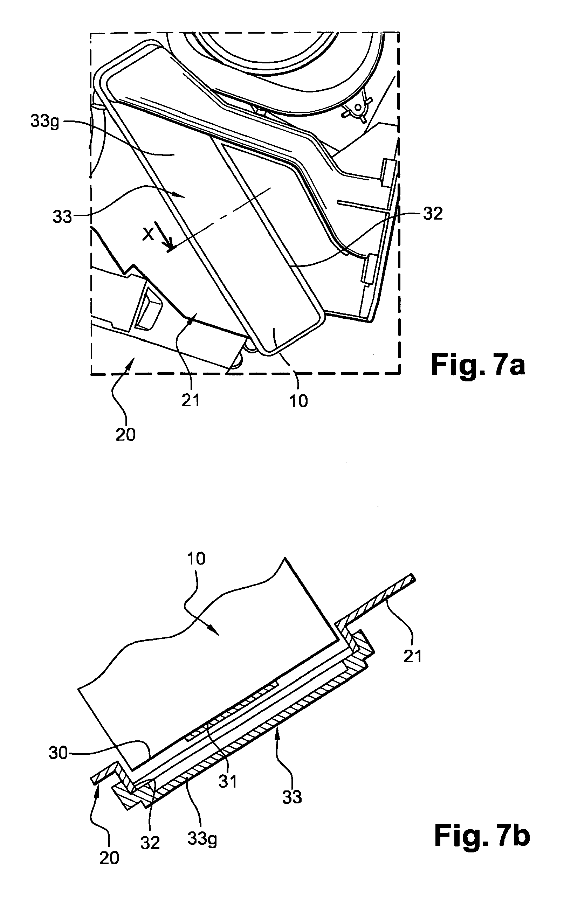

Les figures 7a et 7b présentent une sixième variante du premier mode de réalisation d'un système d'identification selon la présente invention dans laquelle l'ouverture de lecture 32 constitue aussi une ouverture d'accès au composant 10. Le moyen d'obturation 33 de l'ouverture de lecture 32 est une trappe 33g formant un moyen d'obturation de l'ouverture d'accès au composant 10.

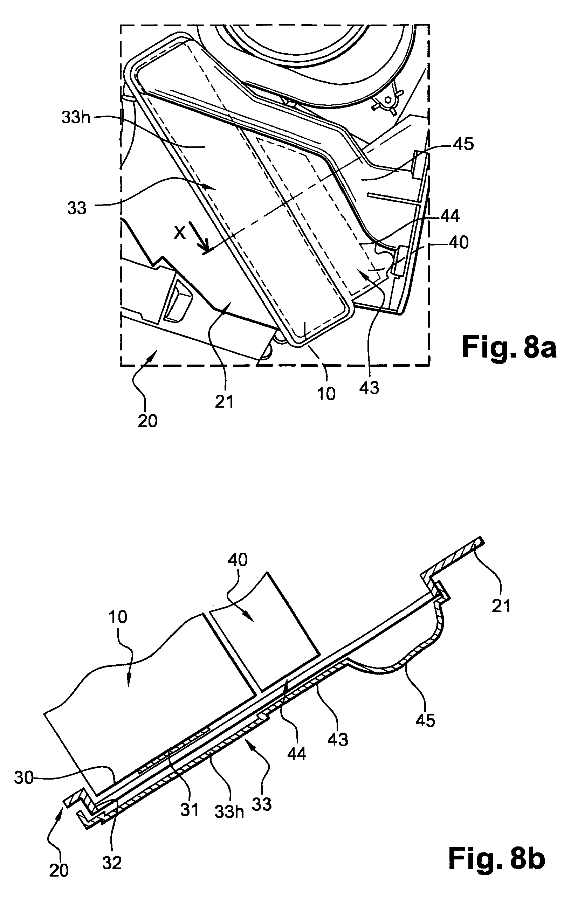

Une septième variante du premier mode de réalisation d'un système d'identification selon la présente invention est présentée aux figures 8a et 8b. Selon cette variante, et de façon similaire au dispositif selon les figures 7a et 7b, l'ouverture de lecture 32 constitue aussi une ouverture d'accès au composant 10. Le moyen d'obturation 33 de l'ouverture de lecture 32 est une trappe 33h formant un moyen d'obturation de l'ouverture d'accès au composant 10. De plus, la trappe 33h forme un moyen d'obturation commun avec un moyen de fermeture 43 de l'ouverture d'accès 44 à un deuxième composant 40, notamment un filtre à air intégré au boîtier de chauffage, de ventilation et de climatisation 20.

De plus, et de façon complémentaire, selon l'exemple présenté en figures 8a et 8b, le moyen d'obturation commun formé de la trappe 33h et du moyen de fermeture 43 intègre également un capot 45 permettant de couvrir des éléments additionnels du boîtier de chauffage, de ventilation et de climatisation 20, par exemples des tubulures du composant 10 installé dans le boîtier de chauffage, de ventilation et de climatisation 20. De façon analogue, le capot 45 peut faire partie intégrante d'une pièce unique avec la trappe 33h et le moyen de fermeture 43.

Comme pour la variante des figures 5a et 5b, l'ouverture de lecture 32 et l'ouverture d'accès 44 peuvent être séparées ou former une ouverture unique, telle que montrées sur les figures 8a et 8b.

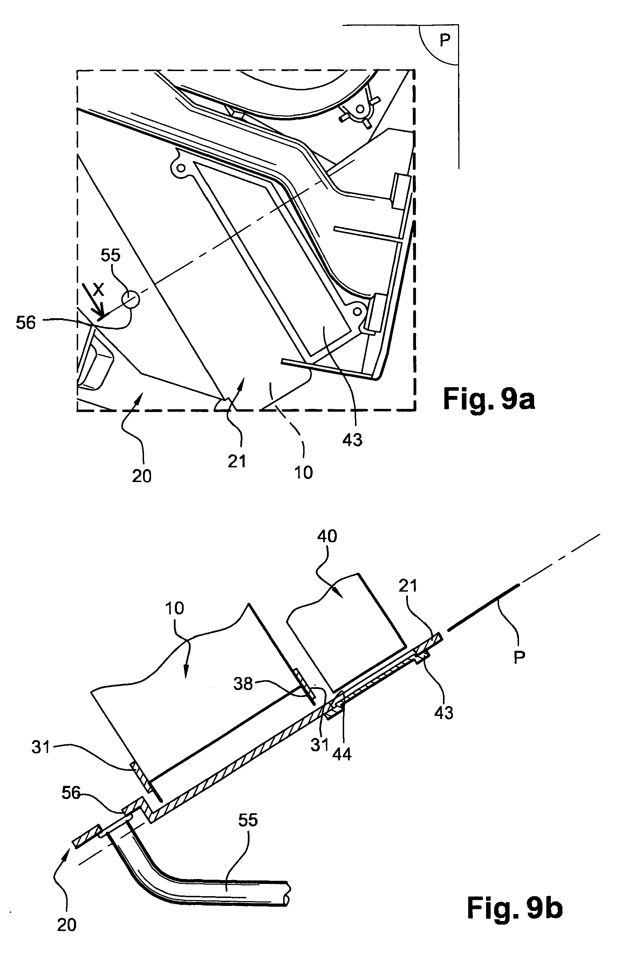

Les figure 9a et 9b présentent un deuxième mode de réalisation d'un système d'identification selon la présente dans lequel la lecture de la référence d'identification 31 est constituée par l'ouverture d'accès 44 à un deuxième composant 40 du boîtier de chauffage, de ventilation et de climatisation 20, notamment un filtre à air disposé dans le boîtier de chauffage, de ventilation et de climatisation 20.

Le moyen d'obturation de l'ouverture de lecture est alors le moyen de fermeture 43 de l'ouverture d'accès 44.

On remarquera que, dans ce mode de réalisation, l'ouverture de lecture n'est pas placée directement en regard de la référence d'identification 31. La référence d'identification 31 est disposée à l'intérieur du boîtier de chauffage, de ventilation et de climatisation 20 de manière à pouvoir être lue de l'extérieur à travers l'ouverture d'accès 44 au deuxième composant 40. En particulier, la référence d'identification 31 est portée par un support 38 disposé perpendiculairement à un plan P contenant l'ouverture d'accès 44.

Par ailleurs, la lecture de la référence d'identification 31 peut également être réalisée par le retrait d'un autre organe intégré ou connecté au boîtier de chauffage, de ventilation et de climatisation 20. Les figures 9a et 9b présentent un tel exemple par le biais d'un tuyau 55 permettant de canaliser un flux d'air issu du boîtier de chauffage, de ventilation et de climatisation 20 vers un espace dédié de l'habitacle du véhicule, notamment la boîte à gants. Le tuyau 55 est connecté au boîtier de chauffage, de ventilation et de climatisation 20 par l'intermédiaire d'un orifice de connexion 56 pratiqué à travers la paroi 21 du boîtier de chauffage, de ventilation et de climatisation 20.

Selon cet exemple, la lecture de la référence d'identification 31 se fait à travers l'orifice de connexion 56 après avoir préalablement déconnecté le tuyau 55 de la paroi 21. Par suite, il suffit de reconnecter le tuyau 55 dans l'orifice de connexion 56.

Bien évidemment, l'invention n'est pas limitée aux modes de réalisation décrits précédemment et fournis uniquement à titre d'exemple et englobe d'autres variantes que pourra envisager l'homme du métier dans le cadre de la présente invention telle que définie par les revendications.

## Revendications

1. Système d'identification d'un composant (10) d'un circuit de traitement thermique d'un flux d'air, le composant (10) étant disposé à l'intérieur d'un boîtier de chauffage, de ventilation et de climatisation (20) d'un véhicule automobile, **caractérisé en ce que** ledit composant (10) est un évaporateur d'une boucle thermodynamique de climatisation de circulation d'un fluide réfrigérant, et **en ce que** le système d'identification comprend :
- une référence d'identification (31) de l'évaporateur (10), portée par un support (30, 38) à l'intérieur du boîtier de chauffage, de ventilation et de climatisation (20),
- une ouverture de lecture (32) de la référence d'identification (31), ménagée à travers une paroi (21) du boîtier de chauffage, de ventilation et de climatisation et placée en regard de la référence d'identification (31), et
- au moins un moyen d'obturation (33, 33a, 33b, 33c, 33d, 33e' 33f, 33g, 33h, 43, 53) de l'ouverture de lecture (32).

2. Système d'identification selon la revendication 1, dans lequel le moyen d'obturation (33) est constitué par une fenêtre transparente (33a) disposée dans l'ouverture de lecture (32).

3. Système d'identification selon la revendication 1, dans lequel le moyen d'obturation (33) est constitué par une paroi sécable (33b) disposée dans l'ouverture de lecture (32).

4. Système d'identification selon la revendication 1, dans lequel le moyen d'obturation (33) est constitué par un volet (33c) à charnière-film (37) disposé dans l'ouverture de lecture (32), le volet (33c) étant mobile entre une position ouverte de lecture et une position fermée d'obturation.

5. Système d'identification selon la revendication 1 ou 3, dans lequel le moyen d'obturation (33) est constitué par un cache (33d) disposé dans l'ouverture de lecture (32).

6. Système d'identification selon la revendication 1, dans lequel le moyen d'obturation (33) est un moyen d'obturation (33g) de l'ouverture d'accès à l'évaporateur (10) du boîtier de chauffage, de ventilation et de climatisation (20).

7. Système d'identification selon la revendication 1, dans lequel le moyen d'obturation (33) est un moyen d'obturation (43) commun à l'ouverture de lecture (32) et à une ouverture d'accès (44) à un deuxième composant (40, 50) du boîtier de chauffage, de ventilation et de climatisation (20).

8. Système d'identification selon l'une quelconque des revendications 1 à 5, dans lequel le moyen d'obturation (33, 33a, 33e, 33f, 33h) est intégré à un moyen de fermeture (43, 53) d'une ouverture d'accès (44, 52) à un deuxième composant (40, 50) du boîtier de chauffage, de ventilation et de climatisation (20).

9. Système d'identification selon la revendication 7 ou 8, dans lequel le deuxième composant (40, 50) est un filtre à air ou un radiateur disposé à l'intérieur du boîtier de chauffage, de ventilation et de climatisation (20).

10. Système d'identification selon l'une des revendications précédentes, dans lequel le fluide réfrigérant est le dioxyde de carbone.

## Claims

1. System for identifying a component (10) of an airflow heat treatment circuit, the component (10) being arranged inside a heating, ventilation and air conditioning box (20) of a motor vehicle, **characterized in that** said component (10) is a coolant circulation air conditioning thermodynamic loop evaporator, and **in that** the identification system comprises:
- an identification reference (31) of the evaporator (10), borne by a support (30, 38) inside the heating, ventilation and air conditioning box (20),
- an aperture (32) for reading the identification reference (31), formed through a wall (21) of the heating, ventilation and air conditioning box and placed facing the identification reference (31), and
- at least one means (33, 33a, 33b, 33c, 33d, 33e, 33f, 33g, 33h, 43, 53) for blocking the reading aperture (32).

2. Identification system according to Claim 1, in which the blocking means (33) consists of a transparent window (33a) arranged in the reading aperture (32).

3. Identification system according to Claim 1, in which the blocking means (33) consists of a breakable wall (33b) arranged in the reading aperture (32).

4. Identification system according to Claim 1, in which the blocking means (33) consists of a flap (33c) with film hinge (37) arranged in the reading aperture (32), the flap (33c) being able to move between an open reading position and a closed blocking position.

5. Identification system according to Claim 1 or 3, in which the blocking means (33) consists of a cover (33d) arranged in the reading aperture (32).

6. Identification system according to Claim 1, in which the blocking means (33) is a means (33g) for blocking the aperture for accessing the evaporator (10) of the heating, ventilation and air conditioning box (20).

7. Identification system according to Claim 1, in which the blocking means (33) is a blocking means (43) common to the reading aperture (32) and to an aperture (44) for accessing a second component (40, 50) of the heating, ventilation and air conditioning box (20).

8. Identification system according to any one of Claims 1 to 5, in which the blocking means (33, 33a, 33e, 33f, 33h) is integrated with a means (43, 53) for closing an aperture (44, 52) for accessing a second component (40, 50) of the heating, ventilation and air conditioning box (20).

9. Identification system according to Claim 7 or 8, in which the second component (40, 50) is an air filter or a radiator arranged inside the heating, ventilation and air conditioning box (20).

10. Identification system according to one of the preceding claims, in which the coolant is carbon dioxide.

## Patentansprüche

1. System zur Kennzeichnung eines Bauteils (10) eines Wärmebehandlungskreislaufs eines Luftstroms, wobei das Bauteil (10) im Inneren eines Heizungs-, Lüftungs- und Klimatisierungsgehäuses (20) eines Kraftfahrzeugs angeordnet ist, **dadurch gekennzeichnet, dass** das Bauteil (10) ein Verdampfer einer thermodynamischen Klimatisierungsschleife eines Kühlmittelkreislaufs ist, und dass das Kennzeichnungssystem enthält:
- eine Kennzeichnungsreferenz (31) des Verdampfers (10), die von einem Träger (30, 38) innerhalb des Heizungs-, Lüftungs- und Klimatisierungsgehäuses (20) getragen wird,
- eine Leseöffnung (32) der Kennzeichnungsreferenz (31), die durch eine Wand (21) des Heizungs-, Lüftungs- und Klimatisierungsgehäuses ausgespart und gegenüber der Kennzeichnungsreferenz (31) angeordnet ist, und
- mindestens eine Verschlusseinrichtung (33, 33a, 33b, 33c, 33d, 33e, 33f, 33g, 33h, 43, 53) der Leseöffnung (32).

2. Kennzeichnungssystem nach Anspruch 1, wobei die Verschlusseinrichtung (33) aus einem durchsichtigen Fenster (33a) besteht, das in der Leseöffnung (32) angeordnet ist.

3. Kennzeichnungssystem nach Anspruch 1, wobei die Verschlusseinrichtung (33) aus einer trennbaren Wand (33b) besteht, die in der Leseöffnung (32) angeordnet ist.

4. Kennzeichnungssystem nach Anspruch 1, wobei die Verschlusseinrichtung (33) aus einer Klappe (33c) mit Folienscharnier (37) besteht, die in der Leseöffnung (32) angeordnet ist, wobei die Klappe (33c) zwischen einer offenen Lesestellung und einer geschlossenen Verschlussstellung beweglich ist.

5. Kennzeichnungssystem nach Anspruch 1 oder 3, wobei die Verschlusseinrichtung (33) aus einer Abdeckung (33d) besteht, die in der Leseöffnung (32) angeordnet ist.

6. Kennzeichnungssystem nach Anspruch 1, wobei die Verschlusseinrichtung (33) eine Verschlusseinrichtung (33g) der Zugangsöffnung zum Verdampfer (10) des Heizungs-, Lüftungs- und Klimatisierungsgehäuses (20) ist.

7. Kennzeichnungssystem nach Anspruch 1, wobei die Verschlusseinrichtung (33) eine der Leseöffnung (32) und einer Zugangsöffnung (44) zu einem zweiten Bauteil (40, 50) des Heizungs-, Lüftungs*- und Klimatisierungsgehäuses (20) gemeinsame Verschlusseinrichtung (43) ist.

8. Kennzeichnungssystem nach einem der Ansprüche 1 bis 5, wobei die Verschlusseinrichtung (33, 33a, 33e, 33f, 33h) in eine Schließeinrichtung (43, 53) einer Zugangsöffnung (44, 52) zu einem zweiten Bauteil (40, 50) der Heizungs-, Lüftungs- und Klimatisierungsgehäuses (20) integriert ist.

9. Kennzeichnungssystem nach Anspruch 7 oder 8, wobei das zweite Bauteil (40, 50) ein Luftfilter oder ein Radiator ist, der im Inneren des Heizungs-, Lüftungs- und Klimatisierungsgehäuses (20) angeordnet ist.

10. Kennzeichnungssystem nach einem der vorhergehenden Ansprüche, wobei das Kühlmittel Kohlendioxid ist.
